# FASCICULE DE BREVET EUROPEEN

(11) **EP 3 601 765 B1**
(45) Date de publication et mention de la délivrance du brevet: **17.02.2021**
(21) Numéro de dépôt: 18722650.1
(22) Date de dépôt: 27.03.2018
(51) Int. Cl.: F02C 6/02, F02C 7/143, F02C 3/30, B64D 35/08

(54) **DISPOSITIF AMÉLIORÉ D'AUGMENTATION TEMPORAIRE DE PUISSANCE DE TURBOMACHINE**
VERBESSERTE VORRICHTUNG ZUR TEMPORÄREN ERHÖHUNG DER TURBOMASCHINENLEISTUNG
IMPROVED DEVICE FOR TEMPORARILY INCREASING TURBOMACHINE POWER

(30) Priorité: 27.03.2017 FR 1752506
(43) Date de publication de la demande: 05.02.2020
(73) Titulaire: Safran Helicopter Engines, 64510 Bordes (FR)
(72) Inventeur: POUSSE, Frédéric, 77550 Moissy-Cramayel (FR); NAPIAS, Lionel, 77550 Moissy-Cramayel (FR); MINEL, Laurent, 77550 Moissy-Cramayel (FR); MOINE, Bertrand, 77550 Moissy-Cramayel (FR)
(74) Mandataire: Cabinet Beau de Loménie
(86) Numéro de dépôt international: PCT/FR2018/050747
(87) Numéro de publication internationale: WO 2018/178565

(56) Documents cités:
- EP-A1- 2 815 965
- FR-A1- 3 000 137
- US-A- 3 434 281
- US-A- 3 518 023

## Description

### DOMAINE DE L'INVENTION

L'invention concerne le domaine des turbomachines et plus particulièrement un dispositif amélioré d'augmentation temporaire de puissance d'une turbomachine, un ensemble propulsif comprenant un tel dispositif, et un aéronef équipé d'un tel ensemble propulsif.

### ETAT DE LA TECHNIQUE ANTERIEURE

Dans certaines circonstances, il peut être souhaitable d'augmenter temporairement la puissance d'une turbomachine. Par exemple, lors du décollage d'un aéronef ou dans des conditions de vol spécifiques, on peut avoir besoin d'un apport ponctuel de puissance additionnelle. Dans d'autres circonstances, dans un ensemble propulsif comprenant une pluralité de turbomachines, la défaillance de l'une d'entre elles peut nécessiter une augmentation temporaire de la puissance d'une ou plusieurs autres afin de compenser la puissance perdue par la turbomachine défaillante.

Une des solutions connues de la personne du métier pour obtenir cette augmentation temporaire de puissance est l'injection d'un fluide réfrigérant qui peut être, entre autres, de l'eau ou un mélange d'eau et d'un antigel, comme par exemple le méthanol, l'éthanol ou le glycol, dans la veine d'air en amont de la chambre de combustion. D'une part cette injection permet de refroidir cet air en amont de la chambre de combustion, augmentant ainsi sa densité et donc le débit massique d'oxygène admis dans la chambre de combustion. D'autre part, la vaporisation de ce fluide réfrigérant dans la chambre de combustion permet d'augmenter très sensiblement la pression et/ou le débit volumique en aval de la chambre de combustion, et donc le travail mécanique récupéré dans la turbine.

Une telle solution est décrite par FR1262433, où le fluide réfrigérant est contenu dans un réservoir pressurisé, et injecté au sein de la turbomachine par l'activation d'une ou plusieurs vannes. FR3000137 divulgue un autre exemple d'une telle solution. Toutefois, ces vannes peuvent présenter des défaillances empêchant l'injection du fluide réfrigérant dans la veine d'air en amont de la chambre de combustion limitant ainsi la fiabilité de cette solution. Il existe donc un besoin en ce sens.

### PRESENTATION DE L'INVENTION

Un mode de réalisation concerne un dispositif selon la revendication 1 d'augmentation temporaire de puissance pour augmenter la puissance d'au moins une première turbomachine et d'au moins une deuxième turbomachine, ledit dispositif comprenant :
un réservoir de liquide réfrigérant ;
un premier circuit d'injection, connecté audit réservoir et débouchant sur au moins une tuyère d'injection configurée pour être installée en amont de la première turbomachine ;
un deuxième circuit d'injection, connecté audit réservoir et débouchant sur au moins une tuyère d'injection configurée pour être installée en amont de la deuxième turbomachine ;
le premier circuit d'injection et le deuxième circuit d'injection comportant chacun au moins une première vanne et au moins une deuxième vanne disposée en amont de ladite au moins une première vanne ; et
une conduite de dérivation reliant le premier circuit d'injection et le deuxième circuit d'injection, en amont de leur première vanne et en aval de leur deuxième vanne.

Dans le présent exposé, les termes « aval » et « amont » sont considérés suivant le sens d'écoulement normal des gaz au sein des circuits d'injection.

Le dispositif d'augmentation temporaire de puissance permet, lorsque cela s'avère nécessaire, d'augmenter temporairement la puissance de l'une de la première ou de la deuxième turbomachine en injectant le liquide réfrigérant en amont de la chambre de combustion de ladite l'une de la première ou de la deuxième turbomachine. Cette injection est possible par l'ouverture de la deuxième vanne, puis de la première vanne du circuit d'injection par l'intermédiaire duquel le liquide réfrigérant doit être injecté.

La conduite de dérivation peut-être une conduite comportant deux extrémités. Une première extrémité de la conduite de dérivation est connectée au premier circuit d'injection en aval de sa deuxième vanne et en amont de sa première vanne. Une deuxième extrémité de la conduite de dérivation est connectée au deuxième circuit d'injection en aval de sa deuxième vanne et en amont de sa première vanne. La conduite de dérivation relie ainsi le premier circuit d'injection et le deuxième circuit d'injection de sorte que le liquide réfrigérant peut s'écouler depuis le premier circuit d'injection, vers le deuxième circuit d'injection, par l'intermédiaire de ladite conduite de dérivation, et inversement.

La conduite de dérivation permet de pallier un défaut d'ouverture de la deuxième vanne. En effet, lorsqu'il s'avère nécessaire d'augmenter temporairement la puissance d'une des turbomachines, et que la deuxième vanne du circuit d'injection correspondant à ladite turbomachine reste fermée, l'ouverture de la deuxième vanne du circuit d'injection de l'autre des turbomachines permet l'écoulement du liquide réfrigérant jusqu'à la première vanne du circuit d'injection correspondant à ladite turbomachine, par l'intermédiaire de la conduite de dérivation. La fiabilité du dispositif est ainsi accrue, dans la mesure où, grâce à la conduite de dérivation, le blocage de l'une ou l'autre des deuxièmes vannes n'empêche pas le liquide réfrigérant de circuler jusqu'à la première vanne du circuit d'injection correspondant à la turbomachine dont la puissance doit être augmentée.

Dans certains modes de réalisation, les premières vannes du premier et du deuxième circuit d'injection sont configurées pour s'ouvrir quand la différence de pression entre l'amont et l'aval des premières vannes est supérieure à une valeur prédéterminée. La première vanne peut être une vanne à pression.

Ainsi, en cas de défaillance de la deuxième turbomachine, par exemple, la pression au sein de celle-ci, correspondant à la pression en aval de la première vanne du premier circuit d'injection, diminue, de sorte que la différence de pression entre l'amont et l'aval de la première vanne du premier circuit d'injection augmente. Lorsque cette différence de pression dépasse une valeur prédéterminée, la première vanne du premier circuit d'injection s'ouvre. Par ailleurs, la pression au sein de la première turbomachine non défaillante, correspondant à la pression en aval de la première vanne du deuxième circuit d'injection, étant constante, la différence de pression entre l'amont et l'aval de la première vanne du deuxième circuit d'injection est également constante, et la première vanne du deuxième circuit d'injection ne s'ouvre pas. Ainsi, on alimente bien la turbomachine non défaillante en liquide réfrigérant, quel que soit le circuit dans lequel s'écoule le liquide réfrigérant.

Dans certains modes de réalisation, la deuxième vanne du premier et du deuxième circuit d'injection est une électrovanne.

L'ouverture de la deuxième vanne des premier et deuxième circuits d'injection est donc commandée électriquement. Ainsi, en cas de défaillance d'une des deux turbomachines, le circuit d'injection de l'autre des turbomachines est activé, en commandant électriquement l'ouverture de la deuxième vanne dudit circuit d'injection. Cette activation électrique présente l'avantage d'être rapide. Par ailleurs, la présence de ces électrovannes permet de bloquer l'écoulement du liquide réfrigérant, lorsque l'on ne souhaite pas injecter de liquide réfrigérant dans les turbomachines, ce liquide réfrigérant étant mis sous pression dans le réservoir. La fiabilité des électrovannes étant moins importante que celle des vannes à pression, l'utilisation d'électrovannes uniquement à cet endroit du dispositif (une électrovanne par circuit d'injection), permet d'optimiser la fiabilité de ce dernier.

Dans certains modes de réalisation, le dispositif comporte une première unité de commande configurée pour commander l'ouverture de la deuxième vanne du premier circuit d'injection et pour détecter un défaut d'ouverture de la deuxième vanne du premier circuit d'injection, et une deuxième unité de commande configurée pour commander l'ouverture de la deuxième vanne du deuxième circuit d'injection et pour détecter un défaut d'ouverture de la deuxième vanne du deuxième circuit d'injection.

Lorsqu'il s'avère nécessaire d'ouvrir la deuxième vanne du premier circuit d'injection, par exemple, la première unité de commande commande son ouverture. Le liquide réfrigérant peut ainsi s'écouler jusqu'à la première vanne du premier circuit d'injection. Si, dans ce cas de figure, la deuxième vanne du premier circuit d'injection ne s'ouvre pas, malgré la commande de la première unité de commande, cette dernière détecte un défaut d'ouverture. De même, lorsqu'il s'avère nécessaire d'ouvrir la deuxième vanne du deuxième circuit d'injection, par exemple, la deuxième unité de commande commande son ouverture. Le liquide réfrigérant peut ainsi s'écouler jusqu'à la première vanne du deuxième circuit d'injection. Si, dans ce cas de figure, la deuxième vanne du deuxième circuit d'injection ne s'ouvre pas, malgré la commande de la deuxième unité de commande, cette dernière détecte un défaut d'ouverture.

Dans certains modes de réalisation, la première et la deuxième unité de commande sont des systèmes de régulation électronique numérique à pleine autorité de la turbomachine.

L'homme du métier connaît également le système de régulation électronique numérique à pleine autorité sous l'acronyme FADEC (pour en anglais « Full Authority Digital Engine Control »). L'utilisation du système de régulation électronique numérique à pleine autorité de la turbomachine (ci-après, et sauf indication contraire, le « système de régulation ») en tant qu'unité de commande du dispositif d'augmentation de puissance permet d'intégrer cette fonction au sein d'un système de commande central, grâce à quoi la cohérence du contrôle avec les autres éléments de la turbomachine est améliorée et la fiabilité du dispositif est accrue.

Dans certains modes de réalisation, le dispositif est configuré pour, lorsque la première unité de commande détecte un défaut d'ouverture de la deuxième vanne du premier circuit d'injection, commander, par l'intermédiaire du la deuxième unité de commande, l'ouverture de la deuxième vanne du deuxième circuit d'injection, pour permettre l'écoulement du liquide réfrigérant vers la tuyère d'injection du premier circuit d'injection depuis le deuxième circuit d'injection par l'intermédiaire de ladite conduite de dérivation, et inversement.

On comprend donc que, lorsqu'il s'avère nécessaire d'augmenter temporairement la puissance de la première turbomachine, la première unité de commande commande l'ouverture de la deuxième vanne du premier circuit d'injection. Lorsque la première unité de commande détecte un défaut d'ouverture de ladite deuxième vanne, la première unité de commande commande alors, par l'intermédiaire de la deuxième unité de commande, l'ouverture de la deuxième vanne du deuxième circuit d'injection. Le liquide réfrigérant peut ainsi s'écouler jusqu'à la première vanne du premier circuit d'injection par l'intermédiaire de la conduite de dérivation.

On comprend également que, lorsqu'il s'avère nécessaire d'augmenter temporairement la puissance de la deuxième turbomachine, la deuxième unité de commande commande l'ouverture de la deuxième vanne du deuxième circuit d'injection. Lorsque la deuxième unité de commande détecte un défaut d'ouverture de ladite deuxième vanne, la deuxième unité de commande commande alors, par l'intermédiaire de la première unité de commande, l'ouverture de la deuxième vanne du premier circuit d'injection. Le liquide réfrigérant peut ainsi s'écouler jusqu'à la première vanne du deuxième circuit d'injection par l'intermédiaire de la conduite de dérivation.

Dans certains modes de réalisation, la première unité de commande et la deuxième unité de commande sont configurées pour communiquer entre elles directement ou par l'intermédiaire d'une unité centrale.

Ainsi, la première unité de commande peut communiquer directement avec la deuxième unité de commande pour commander l'ouverture de la deuxième vanne du deuxième circuit d'injection. Par ailleurs, lorsque la première unité de commande et la deuxième unité de commande communiquent entre elles par l'intermédiaire d'une unité centrale, et lorsque l'une des première et deuxième unités de commande détecte un défaut d'ouverture de la deuxième vanne de l'un des premier et deuxième circuits d'injection, l'unité centrale commande l'ouverture de la deuxième vanne de l'autre des premier et deuxième circuits d'injection, par l'intermédiaire de l'autre des première et deuxième unités de commande.

Un mode de réalisation concerne également un ensemble propulsif comportant une première turbomachine, une deuxième turbomachine, et un dispositif selon l'un quelconque des modes de réalisation précédents.

un mode de réalisation concerne également aéronef comprenant un ensemble propulsif défini précédemment.

Un mode de réalisation concerne un procède selon la revendication 10 d'augmentation temporaire de puissance d'un ensemble propulsif défini précédemment, comprenant des étapes de :
- Détecter un défaut d'ouverture de la deuxième vanne de l'un des circuits parmi le premier et le deuxième circuits d'injection;
- Ouvrir la deuxième vanne de l'autre circuit parmi le premier et le deuxième circuits d'injection.

En cas de défaillance de l'une des deux turbomachines, ce procédé permet l'alimentation en liquide réfrigérant de l'autre des deux turbomachines, même si la deuxième vanne du circuit d'injection par l'intermédiaire duquel le liquide réfrigérant doit être injectée, présente un défaut d'ouverture. La fiabilité du dispositif d'augmentation temporaire de puissance est ainsi accrue.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un aéronef comprenant un ensemble propulsif;
- la figure 2 représente un schéma de principe de l'ensemble propulsif de l'aéronef de la figure 1 selon un mode de réalisation.
- la figure 3 représente les différentes étapes d'un procédé d'augmentation temporaire de puissance selon le présent exposé.

### DESCRIPTION DETAILLEE D'EXEMPLES DE REALISATION

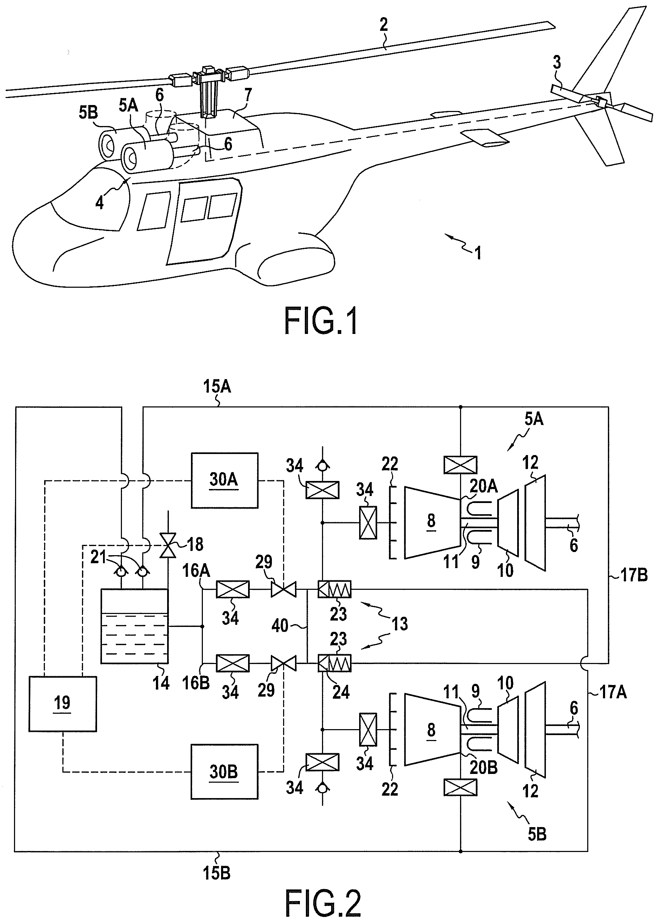

La figure 1 illustre un aéronef 1 à voilure tournante, plus spécifiquement un hélicoptère avec un rotor principal 2 et un rotor de queue anti-couple 3 couplés à un ensemble propulsif 4 pour leur actionnement. L'ensemble propulsif 4 illustré comprend deux turbomachines, à savoir dans cet exemple un premier turbomoteur 5A et un deuxième turbomoteur 5B dont les arbres de sortie 6 sont tous les deux reliés à une boîte de transmission principale 7 pour actionner le rotor principal 2 et le rotor de queue 3.

L'ensemble propulsif 4 est illustré schématiquement sur la figure 2. Chaque turbomoteur 5A, 5B comprend un compresseur 8, une chambre de combustion 9, une première turbine 10 reliée par un arbre moteur 11 au compresseur 8 et une deuxième turbine 12, ou turbine libre, couplée à l'arbre de sortie 6. Afin de compenser au moins temporairement une chute de puissance due à une défaillance de l'un des turbomoteurs 5A ou 5B, l'ensemble propulsif 4 est équipé d'un dispositif 13 d'augmentation temporaire de la puissance de l'autre des turbomoteurs 5A, 5B. Ce dispositif 13 comprend un réservoir 14 de liquide réfrigérant, un premier circuit de pressurisation 15A du réservoir 14, un deuxième circuit de pressurisation 15B du réservoir 14, un premier circuit 16A d'injection du liquide réfrigérant, et un deuxième circuit 16B d'injection du liquide réfrigérant. Le liquide réfrigérant contenu dans le réservoir 14 peut être, par exemple, de l'eau seule ou mélangée à un antigel, tel que du méthanol, de l'éthanol et/ou du glycol. Le réservoir 14 comporte une électrovanne 18 de dépressurisation connectée à une unité centrale de commande 19 de l'aéronef 1. Grâce à cette électrovanne 18, l'unité centrale de commande 19 pourra commander la dépressurisation du réservoir, par exemple en fin de vol.

Le premier circuit de pressurisation 15A relie le réservoir 14 à un point 20A de prélèvement d'air pressurisé en aval d'au moins un étage du compresseur 8 du premier turbomoteur 5A. Il comprend un clapet anti-retour 21, orienté de manière à permettre le débit d'air pressurisé du compresseur 8 vers le réservoir 14, mais empêcher la dépressurisation du réservoir 14 dans l'autre sens. Le deuxième circuit de pressurisation 15B relie le réservoir 14 à un point 20B de prélèvement d'air pressurisé en aval d'au moins un étage du compresseur 8 du deuxième turbomoteur 5B. Il comprend un clapet anti-retour 21, orienté de manière à permettre le débit d'air pressurisé du compresseur 8 vers le réservoir 14, mais empêcher la dépressurisation du réservoir 14 dans l'autre sens. Grâce à cette redondance des circuits de pressurisation 15A, 15B, l'un peut continuer à assurer la pressurisation du réservoir 14 même si la turbomachine à laquelle l'autre est relié est défaillante.

Chacun des premier et deuxième circuits d'injection 16A, 16B est connecté au réservoir 14 et débouche sur une pluralité de tuyères d'injection 22 installées en amont du compresseur 8 des premier et deuxième turbomoteurs 5A et 5B respectivement. Chacun de ces circuits d'injection 16A, 16B comporte une première vanne 23 pour bloquer le passage du liquide réfrigérant en dessous d'un certain seuil de pression au sein du circuit 16A, 16B, pour éviter toute fuite intempestive vers les tuyères d'injection 22 lorsqu'aucune augmentation temporaire de puissance n'est nécessaire. Ainsi, dans le premier circuit d'injection 16A, l'ouverture de la première vanne 23 est commandée par la surpression du liquide réfrigérant fourni par le réservoir 14 par rapport à l'air comprimé fourni par le compresseur 8 du deuxième turbomoteur 5B, tandis que dans le deuxième circuit d'injection 16B, l'ouverture de la première vanne 23 est commandée par la surpression de ce liquide réfrigérant par rapport à l'air comprimé fourni par le compresseur 8 du premier turbomoteur 5A.

Des crépines 34 dans les circuits d'injection 16A et 16B permettent de filtrer les éventuelles impuretés présentes dans le liquide réfrigérant

Chaque circuit d'injection 16A, 16B comprend aussi, en amont de sa première vanne 23, une deuxième vanne 29 pouvant être une électrovanne connectée à une première unité de commande et à une deuxième unité de commande 30A, 30B respectivement, afin d'assurer l'activation ou désactivation de chaque circuit d'injection 16A, 16B. Les unités de commande 30A et 30B sont dans cet exemple des systèmes de régulation électronique numérique à pleine autorité de turbomachine (ou FADEC) respectivement des turbomoteurs 5A et 5B. Ainsi, ces unités de commande 30A, 30B, également reliées à l'unité centrale de commande 19, pourront activer le circuit d'injection 16A, 16B en commandant l'ouverture de la deuxième vanne 29 en fonction des paramètres de fonctionnement de chaque turbomoteur 5A, 5B et/ou d'une commande d'un utilisateur, tel que par exemple un pilote, et le désactiver à nouveau en commandant la fermeture de la deuxième vanne 29. Les paramètres de fonctionnement de chaque turbomoteur 5A, 5B peuvent être déterminés par l'intermédiaire de capteurs de pression (non représentés) connectés aux unités de commande 30A, 30B, et permettant de détecter une éventuelle défaillance de l'un de ces turbomoteurs.

Ainsi, en cas de défaillance d'un turbomoteur 5A ou 5B, l'unité de commande de l'autre moteur détecte, via l'unité centrale de commande 19, une situation nécessitant l'augmentation de puissance. Ainsi, si le premier turbomoteur 5A est défaillant, l'unité de contrôle 30B détecte la nécessité d'augmenter la puissance du deuxième turbomoteur 5B (ou, bien entendu, inversement). Par exemple, il peut s'agir de la détection d'une situation 30s OEI (de l'anglais « One Engine Inoperative », signifiant « un moteur en panne »), qui nécessite l'augmentation pendant 30 secondes de la puissance d'un turbomoteur en cas de panne de l'autre turbomoteur. Dans ce cas, la deuxième unité de commande 30B commande l'ouverture de la deuxième vanne 29 du deuxième circuit d'injection 16B.

Le dispositif 13 comporte une conduite de dérivation 40. La conduite de dérivation 40 comporte une première extrémité connectée au premier circuit d'injection 16A, en aval de la deuxième vanne 29 et en amont de la première vanne 23 du premier circuit d'injection 16A, et une deuxième extrémité connectée fluidiquement au deuxième circuit d'injection 16B, en aval de la deuxième vanne 29 et en amont de la première vanne 23 du deuxième circuit d'injection 16B. Cette conduite de dérivation 40 permet au liquide réfrigérant de s'écouler du premier circuit d'injection le deuxième circuit d'injection, et inversement, en aval des deuxièmes vannes.

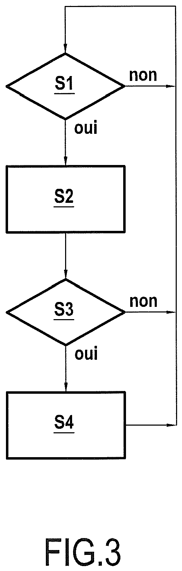

Un procédé d'augmentation temporaire de puissance va maintenant être décrit en référence à la figure 3. Une première étape consiste à détecter la présence d'une défaillance d'une des turbomachines (étape S1).

Si le premier turbomoteur 5A est défaillant (Oui à l'étape S1), on détecte, par l'intermédiaire de la deuxième unité de commande 30B ou de l'unité centrale 19, la nécessité d'augmenter la puissance du deuxième turbomoteur 5B. On commande alors l'ouverture de la deuxième vanne 29 du deuxième circuit d'injection 16B (étape S2). Une détection de l'ouverture de la deuxième vanne 29 du deuxième circuit d'injection est ensuite effectuée (étape S3). S'il est détecté, par la deuxième unité de commande 30B, que la deuxième vanne 29 ne s'est pas ouverte comme prévu (Oui à l'étape S3), et qu'il existe par conséquent un défaut d'ouverture, l'information indiquant que ladite deuxième vanne 29 ne s'est pas ouverte est transmise à l'unité centrale 19. Cette dernière transmet alors cette information à la première unité de commande 30A, qui commande alors l'ouverture de la deuxième vanne 29 du premier circuit d'injection 16A (étape S4). Le liquide réfrigérant peut alors s'écouler jusqu'à la première vanne 23 du deuxième circuit d'injection 16B par l'intermédiaire de la conduite de dérivation 40. La surpression en amont de ladite première vanne 23, par rapport à la pression en aval de celle-ci, provoque alors son ouverture, comme décrit précédemment. Bien que l'ouverture de la deuxième vanne 29 du premier circuit d'injection 16A permet également au liquide réfrigérant de s'écouler jusqu'à la première vanne 23 du premier circuit d'injection 16A, cela ne provoque pas son ouverture, compte tenu du fait qu'aucune surpression n'existe en amont de celle-ci, par rapport à la pression en aval de celle-ci. Si aucune turbomachine n'est défaillante (Non à l'étape S1), ou si aucun défaut d'ouverture n'est détecté (Non à l'étape S3), l'étape S1 est alors répétée, jusqu'à la détection d'une nouvelle défaillance.

De la même façon, si le deuxième turbomoteur 5B est défaillant (Oui à l'étape S1), la première unité de commande 30A détecte la nécessité d'augmenter la puissance du premier turbomoteur 5A et commande l'ouverture de la deuxième vanne 29 du premier circuit d'injection 16A (étape S2). Néanmoins, s'il est détecté, par la première unité de commande 30A, que la deuxième vanne 29 ne s'est pas ouverte comme prévu (Oui à l'étape S3), l'information indiquant que ladite deuxième vanne 29 ne s'est pas ouverte est transmise à l'unité centrale 19. Cette dernière transmet alors cette information à la deuxième unité de commande 30B, qui commande alors l'ouverture de la deuxième vanne 29 du deuxième circuit d'injection 16B (étape S4). Le liquide réfrigérant peut alors s'écouler jusqu'à la première vanne 23 du premier circuit d'injection 16A par l'intermédiaire de la conduite de dérivation 40.

Une telle solution permet d'améliorer de manière significative la fiabilité du dispositif d'augmentation temporaire de puissance. En effet, la probabilité qu'une configuration dans laquelle les deux électrovannes du dispositif soient bloquées en position fermée est nettement inférieure à une configuration dans laquelle une vanne est bloquée en position fermée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif d'augmentation temporaire de puissance (13) pour augmenter la puissance d'au moins une première turbomachine (5A) et d'au moins une deuxième turbomachine (5B), ledit dispositif comprenant :
un réservoir (14) de liquide réfrigérant ;
un premier circuit d'injection (16A) de liquide réfrigérant dans la veine d'air de la première turbomachine (5A), connecté audit réservoir (14) et débouchant sur au moins une tuyère d'injection (22) configurée pour être installée en amont du compresseur (8) de la première turbomachine (5A) ;
un deuxième circuit d'injection (16B) de liquide réfrigérant dans la veine d'air de la deuxième turbomachine (5B), connecté audit réservoir (14) et débouchant sur au moins une tuyère d'injection (22) configurée pour être installée en amont du compresseur (8) de la deuxième turbomachine (5B) ;
le premier circuit d'injection (16A) et le deuxième circuit d'injection (16B) comportant chacun au moins une première vanne (23) et au moins une deuxième vanne (29) disposée en amont de ladite au moins une première vanne (23) ; le dispositif étant **caractérisé en ce qu'**il comprend
une conduite de dérivation (40) reliant le premier circuit d'injection (16A) et le deuxième circuit d'injection (16B), en amont de leur première vanne (23) et en aval de leur deuxième vanne (29).

2. Dispositif d'augmentation temporaire de puissance (13) selon la revendication 1, dans lequel les premières vannes (23) du premier et du deuxième circuit d'injection (16A, 16B) sont configurées pour s'ouvrir quand la différence de pression entre l'amont et l'aval des premières vannes (23) est supérieure à une valeur prédéterminée.

3. Dispositif d'augmentation temporaire de puissance (13) selon la revendication 1 ou 2, dans lequel la deuxième vanne (29) du premier et du deuxième circuit d'injection (16A, 16B) est une électrovanne.

4. Dispositif d'augmentation temporaire de puissance (13) selon l'une quelconque des revendications 1 à 3, comportant une première unité de commande (30A) configurée pour commander l'ouverture de la deuxième vanne (29) du premier circuit d'injection (16A) et pour détecter un défaut d'ouverture de la deuxième vanne (29) du premier circuit d'injection (16A), et une deuxième unité de commande (30B) configurée pour commander l'ouverture de la deuxième vanne (29) du deuxième circuit d'injection (16B) et pour détecter un défaut d'ouverture de la deuxième vanne (29) du deuxième circuit d'injection (16B).

5. Dispositif d'augmentation temporaire de puissance (13) selon la revendication 4, dans lequel la première et la deuxième unité de commande (30A, 30B) sont des systèmes de régulation électronique numérique à pleine autorité de la turbomachine.

6. Dispositif d'augmentation temporaire de puissance (13) selon la revendication 4 ou 5, configuré pour, lorsque la première unité de commande (30A) détecte un défaut d'ouverture de la deuxième vanne (29) du premier circuit d'injection (16A), commander, par l'intermédiaire du la deuxième unité de commande (30B), l'ouverture de la deuxième vanne (29) du deuxième circuit d'injection (16B), pour permettre l'écoulement du liquide réfrigérant vers la tuyère d'injection (22) du premier circuit d'injection (16A) depuis le deuxième circuit d'injection (16B) par l'intermédiaire de ladite conduite de dérivation (40), et inversement.

7. Dispositif d'augmentation temporaire de puissance (13) selon l'une quelconque des revendications 4 à 6, dans lequel la première unité de commande (30A) et la deuxième unité de commande (30B) sont configurées pour communiquer entre elles directement ou par l'intermédiaire d'une unité centrale (19).

8. Ensemble propulsif (4) comportant une première turbomachine (5A), une deuxième turbomachine (5B), et un dispositif d'augmentation temporaire de puissance (13) selon l'une quelconque des revendications précédentes.

9. Aéronef (1) comprenant un ensemble propulsif (4) selon la revendication 8.

10. Procédé d'augmentation temporaire de puissance d'un ensemble propulsif selon la revendication 8, comprenant des étapes de :
- Détecter un défaut d'ouverture de la deuxième vanne (29) de l'un des circuits parmi le premier et le deuxième circuits d'injection (16A, 16B) ;
- Ouvrir la deuxième vanne (29) de l'autre circuit parmi le premier et le deuxième circuits d'injection (16A, 16B).

## Patentansprüche

1. Vorrichtung zur temporären Leistungserhöhung (13), um die Leistung von mindestens einer ersten Turbomaschine (5A) und von mindestens einer zweiten Turbomaschine (5B) zu erhöhen, wobei die Vorrichtung umfasst:
einen Kühlflüssigkeits-Vorratsbehälter (14);
einen ersten Kreis (16A) zum Einspritzen von Kühlflüssigkeit in den Lufteintrittskanal der ersten Turbomaschine (5A), der an den Vorratsbehälter (14) angeschlossen ist und auf mindestens einer Einspritzdüse (22) ausmündet, die ausgelegt ist, um dem Kompressor (8) der ersten Turbomaschine (5A) vorgelagert installiert zu sein;
einen zweiten Kreis (16B) zum Einspritzen von Kühlflüssigkeit in den Lufteintrittskanal der zweiten Turbomaschine (5B), der an den Vorratsbehälter (14) angeschlossen ist und auf mindestens einer Einspritzdüse (22) ausmündet, die ausgelegt ist, um dem Kompressor (8) der zweiten Turbomaschine (5B) vorgelagert installiert zu sein;
wobei der erste Einspritzkreis (16A) und der zweite Einspritzkreis (16B) jeweils mindestens ein erstes Ventil (23) und mindestens ein zweites Ventil (29) aufweisen, das dem mindestens einen ersten Ventil (23) vorgelagert angeordnet ist; wobei die Vorrichtung **dadurch gekennzeichnet ist, dass** sie umfasst
eine Nebenleitung (40), die den ersten Einspritzkreis (16A) und den zweiten Einspritzkreis (16B) ihrem ersten Ventil (23) vorgelagert und ihrem zweiten Ventil (29) nachgelagert verbindet.

2. Vorrichtung zur temporären Leistungserhöhung (13) nach Anspruch 1, wobei die ersten Ventile (23) des ersten und des zweiten Einspritzkreises (16A, 16B) ausgelegt sind, um sich zu öffnen, wenn die Druckdifferenz zwischen dem vorgelagerten und dem nachgelagerten Teil der ersten Ventile (23) einen vorher festgelegten Wert übersteigt.

3. Vorrichtung zur temporären Leistungserhöhung (13) nach Anspruch 1 oder 2, wobei das zweite Ventil (29) des ersten und des zweiten Einspritzkreises (16A, 16B) ein Magnetventil ist.

4. Vorrichtung zur temporären Leistungserhöhung (13) nach einem der Ansprüche 1 bis 3, aufweisend eine erste Steuereinheit (30A), die ausgelegt ist, um das Öffnen des zweiten Ventils (29) des ersten Einspritzkreises (16A) zu befehlen und um einen Öffnungsfehler des zweiten Ventils (29) des ersten Einspritzkreises (16A) zu ermitteln, und eine zweite Steuereinheit (30B), die ausgelegt ist, um das Öffnen des zweiten Ventils (29) des zweiten Einspritzkreises (16B) zu befehlen und um einen Öffnungsfehler des zweiten Ventils (29) des zweiten Einspritzkreises (16B) zu ermitteln.

5. Vorrichtung zur temporären Leistungserhöhung (13) nach Anspruch 4, wobei die erste und die zweite Steuereinheit (30A, 30B) autonome volldigitale elektronische Systeme der Turbomaschine zur Triebwerksregelung sind.

6. Vorrichtung zur temporären Leistungserhöhung (13) nach Anspruch 4 oder 5, die ausgelegt ist, um, wenn die erste Steuereinheit (30A) einen Öffnungsfehler des zweiten Ventils (29) des ersten Einspritzkreises (16A) ermittelt, über die zweite Steuereinheit (30B) das Öffnen des zweiten Ventils (29) des zweiten Einspritzkreises (16B) zu befehlen, um das Fließen der Kühlflüssigkeit zur Einspritzdüse (22) des ersten Einspritzkreises (16A) ab dem zweiten Einspritzkreis (16B) über die Nebenleitung (40) zu gestatten und umgekehrt.

7. Vorrichtung zur temporären Leistungserhöhung (13) nach einem der Ansprüche 4 bis 6, wobei die erste Steuereinheit (30A) und die zweite Steuereinheit (30B) ausgelegt sind, um direkt miteinander oder über eine Zentraleinheit (19) zu kommunizieren.

8. Antriebseinheit (4), aufweisend eine erste Turbomaschine (5A), eine zweite Turbomaschine (5B) und eine Vorrichtung zur temporären Leistungserhöhung (13) nach einem der vorangehenden Ansprüche.

9. Luftfahrzeug (1), umfassend eine Antriebseinheit (4) nach Anspruch 8.

10. Verfahren zur temporären Leistungserhöhung einer Antriebseinheit nach Anspruch 8, umfassend folgende Schritte:
- Ermitteln eines Fehlers beim Öffnen des zweiten Ventils (29) von einem der Kreise von dem ersten und dem zweiten Einspritzkreis (16A, 16B);
- Öffnen des zweiten Ventils (29) des anderen Kreises von dem ersten und dem zweiten Einspritzkreis (16A, 16B).

## Claims

1. A device (13) for temporarily increasing power in order to increase the power from at least one first turbine engine (5A) and from at least one second turbine engine (5B), said device comprising:
- a tank (14) of coolant liquid;
- a first injection circuit (16A) connected to said tank (14) and leading to at least one injection nozzle (22) configured to be installed upstream from the first turbine engine (5A);
- a second injection circuit (16B) connected to said tank (14) and leading to at least one injection nozzle (22) configured to be installed upstream from the second turbine engine (5B);
- each of the first and second injection circuits (16A, 16B) including at least one first valve (23) and at least one second valve (29) arranged upstream from said at least one first valve (23); the device being **characterized in that** it comprises
- a bridge pipe (40) connecting together the first injection circuit (16A) and the second injection circuit (16B) upstream from their respective first valves (23) and downstream from their respective second valves (29).

2. A device (13) for temporarily increasing power according to claim 1, wherein the first valves (23) of the first and second injection circuits (16A, 16B) are configured to open when the upstream to downstream pressure difference of the first valves (23) is greater than a predetermined value.

3. A device (13) for temporarily increasing power according to claim 1 or claim 2, wherein the second valves (29) of the first and second injection circuits (16A, 16B) are solenoid valves.

4. A device (13) for temporarily increasing power according to any one of claims 1 to 3, including a first control unit (30A) configured to control the opening of the second valve (29) of the first injection circuit (16A) and to detect a failure of the second valve (29) of the first injection circuit (16A) to open, and a second control unit (30B) configured to control the opening of the second valve (29) of the second injection circuit (16B) and to detect a failure of the second valve (29) of the second injection circuit (16B) to open.

5. A device (13) for temporarily increasing power according to claim 4, wherein the first and second control units (30A, 30B) are full authority digital engine control systems of the turbine engines.

6. A device (13) for temporarily increasing power according to claim 4 or claim 5, configured so that, when the first control unit (30A) detects a failure of the second valve (29) of the first injection circuit (16A) to open, the second control unit (30B) orders the second valve (29) of the second injection circuit (16B) to open so as to allow the coolant liquid to flow towards the injection nozzle (22) of the first injection circuit (16A) from the second injection circuit (16B) via said bridge pipe (40), and vice versa.

7. A device (13) for temporarily increasing power according to any one of claims 4 to 6, wherein the first control unit (30A) and the second control unit (30B) are configured to communicate with each other directly or via a central unit (19).

8. a propulsion assembly (4) comprising a first turbine engine (5A), a second turbine engine (5B), and a device (13) for temporarily increasing power according to any preceding claim.

9. An aircraft (1) including a propulsion assembly (4) according to claim 8.

10. A method of temporarily increasing power from a propulsion assembly according to claim 8, the method comprising the steps of:
- detecting a failure of the second valve (29) of one of the first and second injection circuits (16A, 16B) to open; and
- opening the second valve (29) of the other one of the first and second injection circuits (16A, 16B).
